# EUROPEAN PATENT SPECIFICATION

(11) **EP 0 862 795 B1**
(45) Date of publication and mention of the grant of the patent: **26.01.2000**
(21) Application number: 96939493.1
(22) Date of filing: 25.10.1996
(51) Int. Cl.: H01M 10/34, H01M 10/52, H01M 6/04, H01M 4/56

(54) **SEMI-FLOODED LEAD ACID BATTERY CELL**
SEMIGEFLUTETE BLEIAKKUMULATORENZELLE
ELEMENT DE BATTERIE D'ACCUMULATEURS SEMI-IMMERGE

(30) Priority: 27.10.1995 US 5940 P
(43) Date of publication of application: 09.09.1998
(73) Proprietor: JONES, William E. M., Freeport (BS)
(72) Inventor: JONES, William E. M., Freeport (BS)
(74) Representative: Kosel, Peter, Dipl.-Ing.
(86) International application number: US9617026
(87) International publication number: WO9715958

(56) References cited:
- EP-A- 0 162 996
- GB-A- 2 203 280
- US-A- 3 904 434
- US-A- 4 113 924
- US-A- 4 414 295
- US-A- 4 587 181

## Description

This application claims the benefit of United States Provisional Patent Application 60/005,940 filed October 27, 1995.

### BACKGROUND OF THE INVENTION

### 1. Field of the Invention

This invention relates to improvements in storage battery cells with regard to a reduction in water consumption during operation and service. More specifically, it relates to the design of a simple and reliable sealed or valve regulated (VR) battery cell that has benefits not available in existing designs. The invention will be described in terms of the lead-acid variety used in stationary applications, but may be equally applied to other cell types and other applications by anyone skilled in the art.

### 2. Description of Related Art

### a. Traditional Flooded Cells

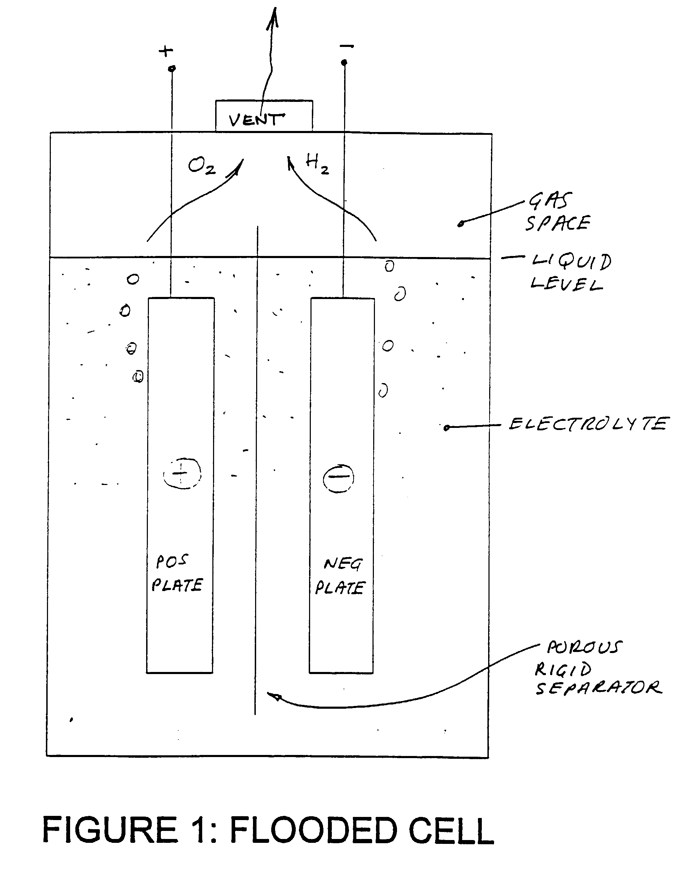

The traditional flooded cell as illustrated schematically in FIG. 1 has at least two electrodes formed as plates immersed in an electrolyte solution. A rigid but porous separator between the plates prevents any electrical contact between them. One plate is positively charged and the other negatively charged. The plates are electrically connected to positive and negative terminals positioned outside the cell for connection to an electric circuit.

A typical application for such a battery is standby power for computers or telephone systems. Here, the cells are placed on racks, connected in series, and charged or "floated" continuously at a controlled voltage.

This continuous charging has the effect of consuming water by electrolysis; that is, water is broken down into oxygen gas (O₂) at the positive plate and hydrogen gas (H₂) at the negative plate. These gasses rise to the surface of the electrolyte as bubbles and escape through a vent hole in the top of the cell.

The water consumption of flooded cells has been reduced to a minimum by charging the cells at the lowest possible voltage, but the cells still require water additions from time to time. Large stationary batteries, for example, may need watering every year in some applications which, in remote sites and with ever increasing labor costs, is expensive for the owner of the batteries.

It is, therefore, a commercial benefit to have batteries that do not require water additions, and there has been a great effort expended by the battery industry, particularly in the last decade, to develop sealed "valve regulated" (VR) cells. These VR cells use a different technology to reduce water consumption.

### b. Valve Regulated Batteries

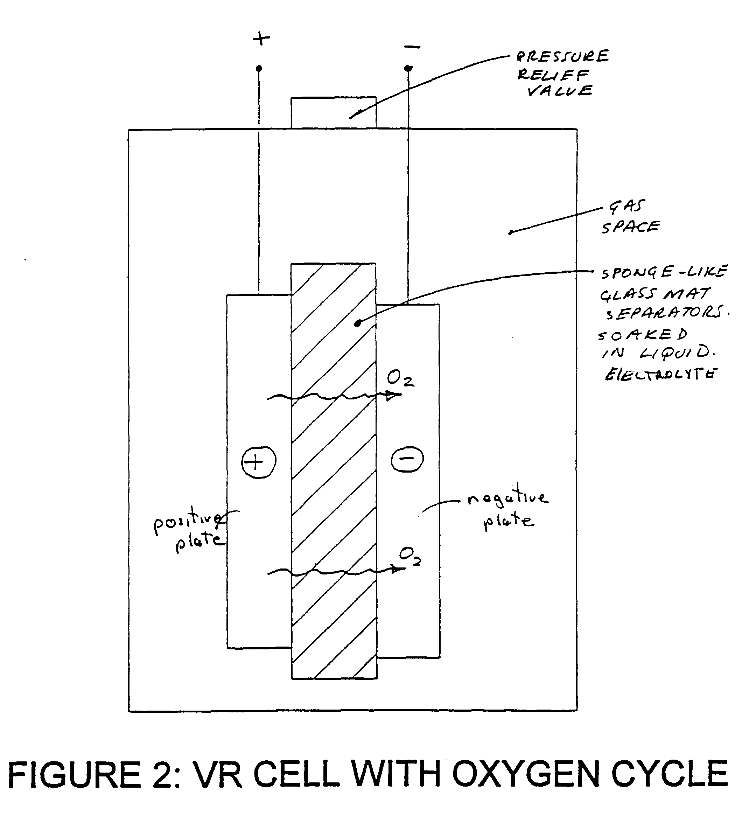

The conventional valve regulated (VR) cell as illustrated schematically in FIG. 2 has the same kinds of plates that a flooded cell contains. However, instead of being submerged in a bath of electrolyte, these plates are sandwiched between absorbent sponge-like separators made from fine glass fibers. Virtually all of the electrolyte is absorbed in the sponge-like separators and there is essentially no "free" electrolyte in the cell. The VR cell also has a pressure relief valve, in place of the normal vent, that permits escape of pressurized gas but does not allow oxygen from the air to enter the cell.

The conventional VR cell has two advantages over the flooded cell. The first advantage is immobilized electrolyte. The electrolyte being absorbed in the sponge-like separators, cannot leak out of the cell -- even if the container is punctured or the cell is inverted. This advantage is very important in some battery applications (e.g. toys) but much less important in others (e.g. stationary standby power systems).

The second advantage is reduced water consumption. The absorbent sponge-like separator in the VR cell is deliberately designed to be less than 100% saturated, leaving gas-permeable channels between the plates. This feature allows a process called the "oxygen cycle" (described below) to be established, which reduces the water consumption of the cell very significantly and allows the cell, at least in theory, to survive its entire design life without any water addition.

For most industrial users, this second advantage is the more important of the two because it reduces maintenance costs which, over a 20 year life of a battery, can be very substantial.

### c. Oxygen Cycle

FIG. 2 also shows, schematically, a valve regulated (VR) cell on charge. The oxygen gas produced on the positive plate, instead of bubbling to the surface of the electrolyte as in a flooded cell, penetrates the separator and comes into direct contact with the negative plate. This oxygen gas "depolarizes" or reduces the voltage of the negative plate so that a minimum of hydrogen gas is produced. Thus the cell has a reduced water consumption.

### d. Problems With VR Cells

VR cells of the lead-acid variety have been commercially successful and widely used in large stationary applications in the past few years. Their performance when new is usually excellent. However, as the cells age, their characteristics change for the worse and there are now many reports of field failures after only 4 or 5 years of service for cells designed for 20 years of life.

Extensive tests by my company of VR cells of different manufacturers confirm that serious variations exist in cell performance and behavior. It is my belief that the principal reason for the problems of the conventional VR cell is related to the sponge-like glass mat separators; as the cell ages, these separators become drier and drier, allowing more and more oxygen to penetrate the separators and reach the negative plate. Eventually, the rate of oxygen "transport" becomes too great and negative plate becomes discharged.

In other words, while a small amount of oxygen transport is good and necessary for the oxygen cycle to function, too much is detrimental to the cell. The negative plate, in a sense, needs protection from "attack" by the oxygen in order to survive. However, this model of cell behavior is not yet well understood by the industry.

### e. Other Battery Cells

U.S. Patent No. 4,436,795 to Cooper et al. discloses an alkaline storage cell in which the upper portions of the electrodes are above the level of the electrolyte. A wicklike absorbant separator is necessary to ensure an adequate supply of electrolyte to those parts of the plates out of the electrolyte. This design is for a recombinant nickel/cadmium battery which can be sealed.

Accordingly, one object of the present invention is to provide a storage battery that minimizes water consumption while protecting the negative electrode from excess oxygen.

Another object of the present invention is to provide a storage battery with improved reliability.

A further object is to provide a storage battery that requires less maintenance.

Another object is to provide a storage battery that will last longer.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations pointed out in the appended claims.

### SUMMARY OF THE INVENTION

Broadly, the objects and advantages of the present invention are attained by an electric battery having a sealed housing containing a liquid electrolyte. The electrolyte has a liquid level above which is a gas space. Gas including oxygen produced within the battery cell collects in the gas space.

Immersed in the electrolyte is a positive electrode and a negative electrode. The negative electrode is partially exposed above the liquid level where it is exposed to the gaseous oxygen. A pressure relief valve is positioned in the battery to allow excess gas to escape the housing, but which prevents air from outside the housing from entering therein.

In this manner water consumption is minimized and the maintenance-free life of the battery extended.

### BRIEF DESCRIPTION OF THE DRAWINGS

The accompanying drawings, which are incorporated in and constitute a part of the specification, illustrate presently preferred embodiments of the invention. Together with the general description given above and the detailed description of the preferred embodiments given below, they serve to explain the principles of the invention.

FIG. 1 is a schematic view of a conventional flooded cell battery.

FIG. 2 is a schematic view of a conventional valve regulated cell.

FIG. 3 is a schematic view of a battery cell made in accordance with the present invention.

FIG. 4 is a schematic view of another battery cell (a second embodiment) made in accordance with the present invention showing the positive plate fully immersed in electrolyte.

FIG. 5 is a schematic view of a third embodiment made in accordance with the present invention.

FIG. 6 is a schematic view of another embodiment of the present invention having a sponge-like separator between the positive and negative plates.

FIG. 7 is a schematic view of a battery cell similar to that shown in FIG. 3 and which includes a catalyst.

FIG. 8 is a schematic view of another embodiment of the present invention having the leads completely submerged in the electrolyte.

FIG. 9 is a graph of gas emissions versus time for two conventional cells and one semi-flooded cell made in accordance with the invention.

### DETAILED DESCRIPTION

The invention will now be explained by way of an embodiment in the form of a "semi-flooded" cell. This cell combines some of the features of the traditional flooded cell with the oxygen cycle used on the conventional VR cell.

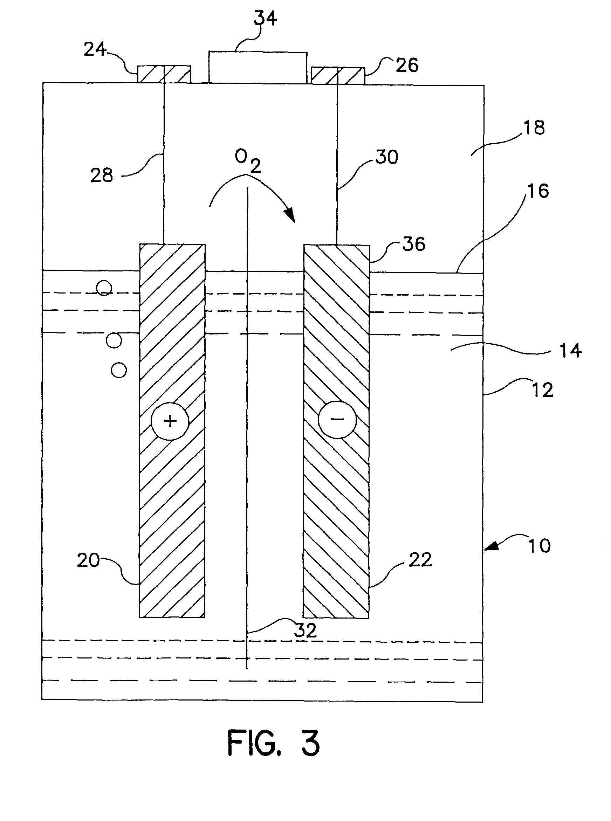

FIG. 3 illustrates such a semi-flooded cell of the lead acid type in its simplest form. The semi-flooded cell 10 has a sealed housing 12 which is gas-tight as is known and used in the art. Within the housing 12 is a liquid electrolyte 14 having a liquid level 16. A gas space 18 defined by the liquid level 16 and the upper inside walls of housing 12 collect gas which floats up from the electrolyte 14.

A positive electrode 20 having active material supported and immersed within the electrolyte 14 is shown. The positive electrode 20 may be formed as a plate as typical in the art. A negative electrode 22 having active material is also supported and immersed within the electrolyte 14 as shown. The negative electrode 22 is likewise formed as a plate. Electrodes used in the type of batteries described herein are commonly formed as plates and thus commonly referred to in the art as plates. Thus, electrode and plate may be used interchangeably in this description, but it being understood that the present invention is not limited to electrodes formed as plates.

The positive and negative plates 20 and 22 are electrically connected to positive and negative terminals 24 and 26 respectively by straps 28 and 30 as they are commonly referred to in the art. A conventional rigid but porous separator 32 is provided to prevent electrical contact between the positive and negative plates 20, 22.

As illustrated, the liquid level 16 of the electrolyte 14 is set slightly below the tops of the plates 20, 22 having a plate section 36 of the negative plate 22 exposed to the oxygen in the gas space 18. That is, the plates are, by design, partially exposed to the gas space 18 above the electrolyte 14.

Normally, on a conventional flooded cell as illustrated in FIG. 1, if the plates are exposed above the electrolyte, the oxygen from the air will enter the cell through the vent cap, oxidize the exposed portions of the negative plates, causing them to discharge. This is why on most flooded cells a minimum level line is printed on the side of the container below which the electrolyte is not permitted to drop.

In this invention as illustrated in FIG. 3, however, a one-way pressure relief valve is provided, as in a conventional VR cell, to prevent oxygen from entering from outside the cell and to allow excess gas to escape the cell rather than over-pressurizing the cell.

During charge, the oxygen cycle takes place in the semi-flooded cell just as it does in the conventional VR cell but only the exposed part of the negative plate takes part in the reaction and the oxygen cycle proceeds above the electrolyte surface, not through the separators as in the case of the conventional VR cell. The obvious benefit is that the greater part of each negative plate is immersed in electrolyte and protected against the oxygen in the cell's atmosphere.

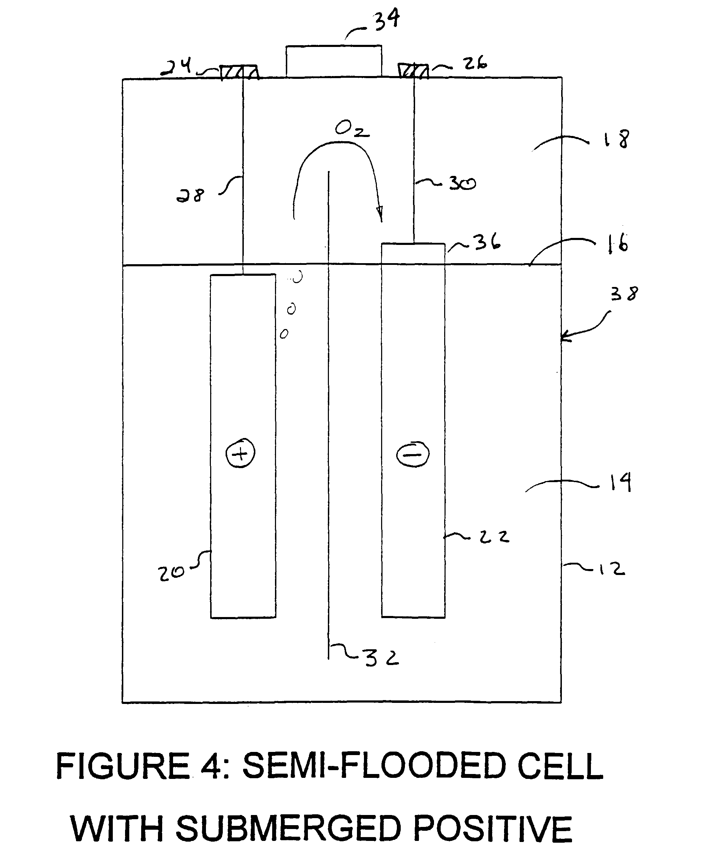

FIG. 4 illustrates a modification of the design. The cell 38 is similar to cell 10 shown in FIG. 3 with similar elements identified with the same reference numbers. Here, the positive plate 20 is completely submerged in the electrolyte 14. Since only the exposed part of the negative plate takes part in the oxygen cycle reaction, the positive electrode 20 may be submerged at all times if so preferred.

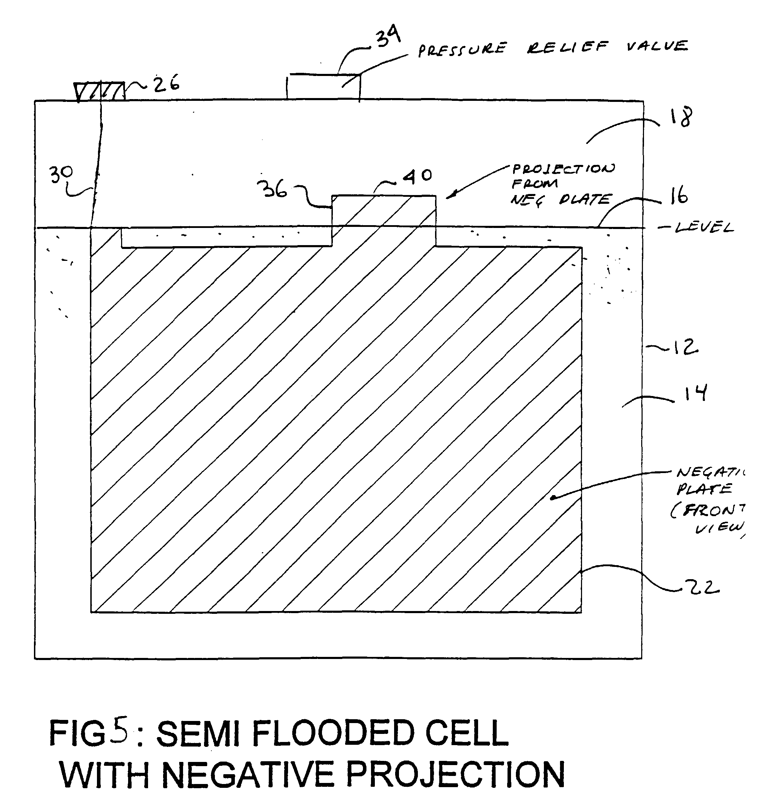

Referring to FIG. 5 another modification to the basic design is to shape the negative plate 22 so that the plate section 36 exposed to the oxygen is a projection 40 that projects above the electrolyte level. This allows easier control of electrolyte levels, especially on cells laid on their sides or having short, wide plates. If the projection is placed in the center portion of the plate, the effect of non-level installation will also be minimized. It is understood that the plate section 36 exposed to oxygen is not limited to the specific examples shown, and can include independent mini plates partially immersed in the electrolyte 14 and partially exposed to the oxygen above the liquid level 16. Such a mini plate would be electrically connected to the negative plate.

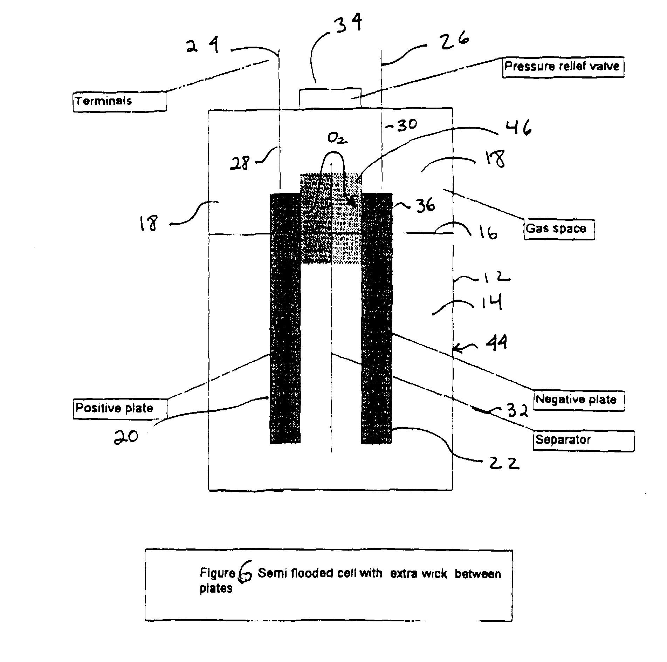

Illustrated in FIG. 6 is another embodiment of the invention which uses sponge-like separators in the semi-flooded design. For a higher charging current, usually used for shorter charge times, a larger amount of negative surface area may be exposed. In this later case, the ionic path may be too long to keep the electrodes charging and discharging uniformly. To counter this, a sponge-like separator may be used in addition, or instead of, the conventional separator in a like manner to a conventional VR cell having glass mats.

Referring to FIG. 6, the semi-flooded battery cell 44 is constructed similarly to the cell of FIG. 3 with the addition of a sponge-like separator 46 between the positive and negative plates partially immersed in the electrolyte 14 and partially exposed above the liquid level 16 of the electrolyte 14 as shown.

Suitable material for the sponge-like separator 46 preferably includes course glass fibers of 10 microns or more as well as other materials having suitable properties. The glass mats here need not be selected to have very strong wicking characteristics as required by VR cells (and which typically use glass separator mats made from very fine glass fibers), but rather relatively weak wicking characteristics. To illustrate, the conventional VR cell as shown in FIG. 2 has no definable electrolyte level because the sponge-like separator acts like blotting paper and distributes the electrolyte level throughout the cell. There is no free electrolyte in the cell housing and no electrolyte will emerge even if the cell is inverted.

In the present embodiment, by contrast, there is a well defined acid level. The intent of this "weak wick" is to draw the electrolyte up a few centimeters to provide an additional ionic path between the plates. A simple parallel would be a wick in an oil lamp which emerges from the liquid with a defined level. If an oil lamp were built like a conventional VR cell, all the oil would be contained in the wick.

Immobilization of the electrolyte is not desired in this case as it is with a conventional VR cell. The cell of this invention, if punctured, would spill electrolyte just like a flooded cell. The aim here is to create a recombinant cell which retains the very real benefits of fully mobile electrolyte including better ionic contact with the plates, better heat transfer and the other benefits described later. The extra sponge-like separators in this variation merely help provide an ionic path between the plates above the normal electrolyte level for larger than normal plate exposures. Strong wick materials as used in VR cells may be used in addition to the weak wick materials as long as the saturation level is reduced or oxygen access to the plate through the material is provided such as with holes through the material.

In technical terms, while the conventional VR cell requires a saturation level of the separators of about 90% to 95%, and will not function at a saturation level much below this, I would seek a saturation level of between 20% and 70% with a preferred saturation of about 40%. The aim is a sponge-like separator that is as open as possible to oxygen transport between the plates. For example, a separator with holes perforated in it would suffice. In the cell of this invention, it is the degree of exposure above the defined electrolyte level that controls the extent of the oxygen cycle, not the average degree of saturation of the separators.

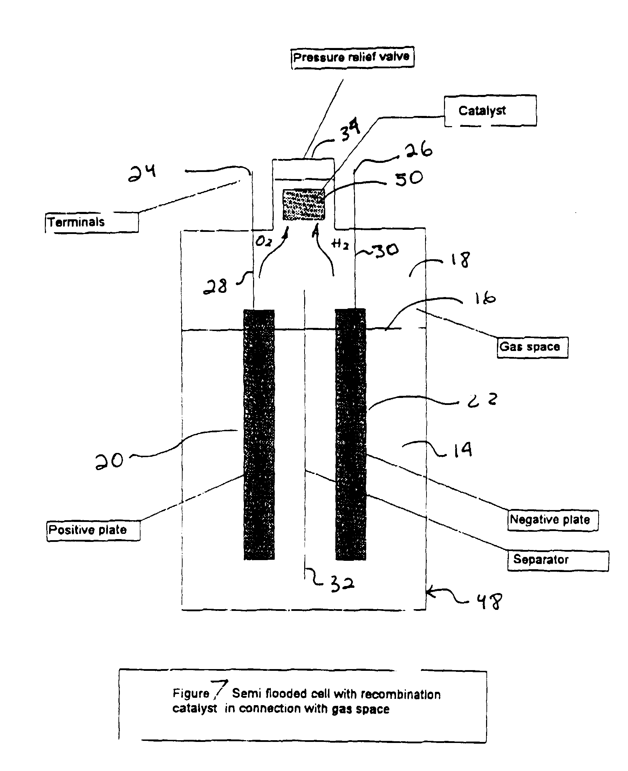

Further improvements can be realized by providing a catalyst. Illustrated in FIG. 7 is a battery cell 48 of the present invention having a semi-flooded design similar to that of FIG. 3. A catalyst 50 capable of recombining hydrogen and oxygen to water is in communication with the gas in the gas space 18. In the present embodiment the catalyst is positioned in the gas space 18. Any catalyst capable of combining hydrogen and oxygen will suffice, for example palladium, platinum, and rhodium among the noble metals and tungsten carbide among the non-noble metals. An explosion limiting ceramic enclosure for the catalyst within the gas space 18 is preferable. The catalyst should be placed within or be accessible to the gas space 18, one preferred example combining the catalyst with the pressure relief valve 34 in the form of a removable plug.

Tests carried out by my company have demonstrated clearly that a catalyst device which can recombine hydrogen and oxygen will dramatically extend the life of VR cells in general and semi-flooded cells in particular. Many battery designers would consider catalysts to be redundant in VR cells since these cells are themselves "recombinant" cells. However, the term is misleading, because the VR cell only recombines oxygen gas and has no ability to recombine hydrogen gas. A catalyst, on the other hand, recombines both gasses and it is this difference that makes it so beneficial.

The result of one test is exemplary: 5 VR cells with catalysts were compared with 5 standard but otherwise identical cells for gas emissions which, as has been explained, is related to water loss and, therefore, to service life. The test was run at a temperature of 32°C (90 degrees Fahrenheit) and at charging voltages of 2.25 volts per cell; both are typical of normal service. Gas was collected from all the cells. The surprising results were as follows:

| | |
|---|---|
| Predicted life to failure, standard cells | 5 years |
| | |
| Predicted life to failure, catalyst cells | 25 years |

The reason for this very large improvement is fundamentally due to the ability of the catalyst to oxidize hydrogen. In conjunction with a semi-flooded cell construction, it provides a unique, novel and improved VR cell.

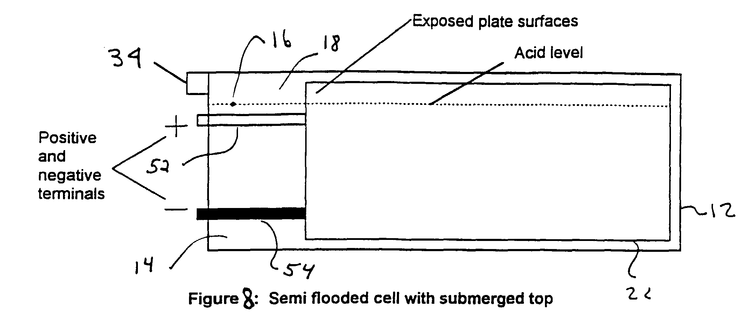

A further improvement is described with reference to FIG. 8 where both positive and negative straps are immersed in the electrolyte. The negative strap connecting the negative plate to the negative terminal outside the cell can corrode. Oxygen contacting the lead strap 54 combines with hydrogen ions on the moist surface of the lead strap 54 to form water. The water, being very pure, dissolves the lead strap 54. Thus, completely immersing the lead strap 54 in the electrolyte 14 as shown protects the lead strap 54 from corrosion.

### Experimental Data

Tests were conducted by my company to compare the performance of conventional storage batteries with those modified in accordance with the present invention. In one such test three lead-acid cells were connected in series so that they received the same current during charge. The cells were of the small Stationary variety with a nominal capacity of 36 ampere hours. The plates were made from a lead-calcium alloy. This is a typical alloy used in present battery designs in the U.S.A. for both flooded cells and VR cells; it is used expressly to minimize hydrogen generations.

Two of the cells were of conventional flooded cell design having a normal electrolyte level of a flooded cell. The third cell was identical except that it had a reduced electrolyte level, partially exposing the negative plate as discussed above for the semi-flooded cell of the present invention. The level of electrolyte was lowered to expose 7% of the negative plate height.

Pressure relief valves (one way valves) were provided in the venting system of all the cells to prevent air from entering the cells.

The three cells were placed in series and charged at a constant current of 24 mA. The voltage of the two unmodified cells were 2.37 and 2.41 volts respectively. The voltage of the modified, or semi-flooded cell, was 2.22 volts, showing a significant depolarization caused by the oxygen cycle.

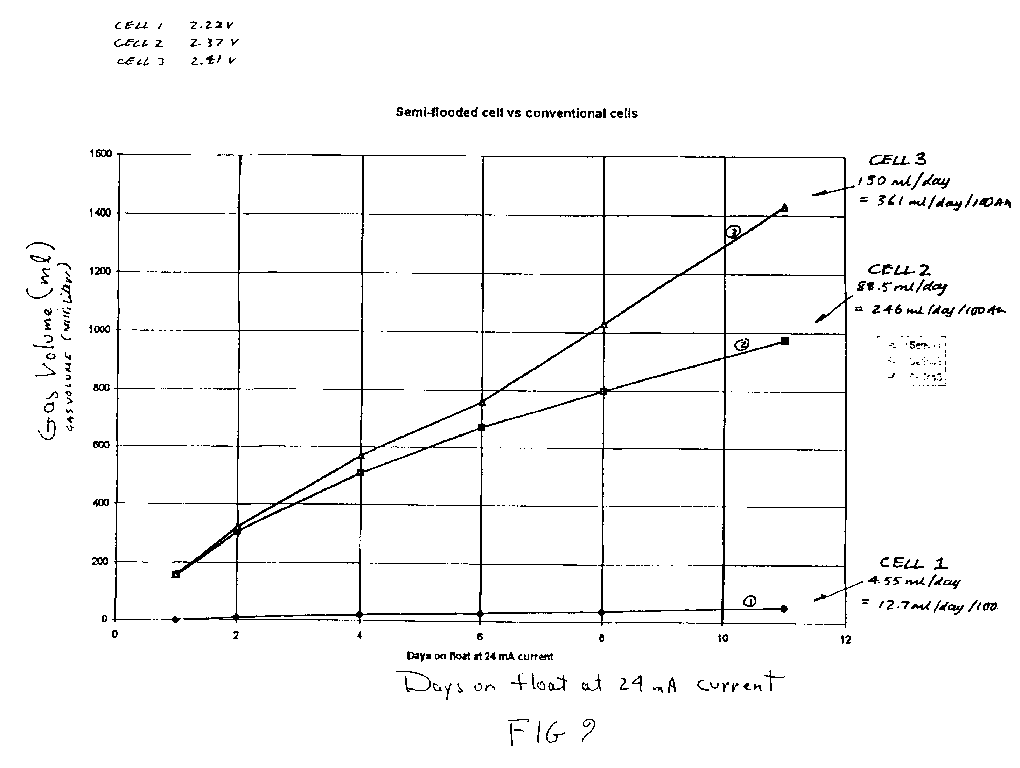

The cells were equipped with gas collection apparatus whereby the gas emissions from each cell were collected in inverted graduated cylinders placed in the bath of water. The gas was collected over a period of 12 days and the data plotted on a graph as shown in FIG. 9. Since gas emissions are related to water consumption, as is well known in the art, the lower the amount of gas emitted, the lower the water consumption of the cell.

By Faraday's law, each ampere hour of overcharge creates about 700 cc of hydrogen plus oxygen gas at room temperature. Since each of the three test cells received the same overcharge of 0.56 ampere hours each day, they would be expected to have a theoretical maximum gassing rate of about 400 cc per day. In practice, the actual values are always less than the theoretical values due to the absorption of some of the oxygen by the negative plate even when submerged in acid.

As expected, the two unmodified cells gassed at a rate that was a significant portion of theoretical. The cell with the higher voltage gassed more than the cell with the lower voltage, again an expected result.

The quantity of gas emitted on a standardized measure of milliliters per day, per 100 ampere hours of cell capacity was as follows:
Semi-Flooded Cell #1 = 12.7 ml/day/100 ampere hours
Flooded Cell #2 = 246 ml/day/100 ampere hours
Flooded Cell #3 = 361 ml/day/100 ampere hours

The semi-flooded cell, therefore, had gas emissions almost 28 times lower than the flooded cells, behaving in a way that is typical of the best VR cells of conventional design. The rate of gassing was, in all cases, stable and uniform over the 12-day test period. There is no question that the concept of the semi-flooded cell works very well.

In this test, the level of the electrolyte in the cell was lowered to expose 7% of the negative plate height. Typically, conventional VR cells are designed to have about 5% of their surfaces exposed by adjusting the saturation of their separators so this is in the same order of magnitude. For a lower charging current (or voltage), less plate may be exposed. Note that the optimum level drop will be different for plates of different aspect ratios: for the same percent of plate area exposed, a tall, narrow plate will need a greater reduction in level than a short, wide plate. In practice, the preferred degree of exposure of the negative plate depends on the characteristics desired of the cell and preferably can range from about .25% to about 25% of the area of the affected plates.

Even more encouraging -- and surprising -- was the discovery that our semi-flooded cell performed even better than production VR cells of the conventional design. This is an important observation and deserves further explanation.

A conventional VR cell will inevitably consume water, albeit at a much lower rate than flooded cells. When about 10% of the available water in the cell has been consumed, the cell's electrical capacity is diminished to the point of failure and the cell is considered to be at the end of its useful life. On present lead-acid designs, the amount of water that can be lost is about 5 grams per year per 100 Ah of capacity.

By well known calculation methods, this water consumption may be transposed into an average gas (hydrogen) emission rate over the life of the cell. The calculation yields the result that present VR cell designs dare not lose more than about 20 ml per day per 100 Ah of gas or they will fail prematurely from dryout.

To check the actual performance of VR cells, we tested 6 conventional VR cells made by major battery companies and found that only one of these met this target rate. That is, 5 out of 6 cells would not achieve their design lives. The gassing of most of these cells was typically two or three times higher the allowable rate of 20 ml/day, signifying that their actual lives would be much shorter than their design life of 20 years.

By contrast, the semi-flooded cell of this invention emitted gas at a rate of only 12.7 ml/day/100 Ah, well below the allowable rate and consistent with a predicted life of about 30 years. This data shows that a semi-flooded cell will not only recombine satisfactorily, but that it will do so better than most conventional VR cells. The conclusion is that the semi-flooded cell is superior to a conventional VR cell in the prime requirement of low maintenance.

### Other Benefits of the Semi-Flooded Cell

**Immediate gassing stability.** It is very significant that the low gassing rate of the semi-flooded cell was achieved immediately after the cell was placed on float; it did not take several months of stabilization as is routinely expected with conventional VR cells. This indicates that the cell will be less variable in operation than conventional VR cells. A side benefit to a battery user is safety, because the gas being emitted is mostly hydrogen and very explosive. If a conventional VR cell gasses excessively when it is new, it may cause explosion hazards in the battery room.

**Less prone to thermal runaway.** Another benefit is that the semi-flooded cell will draw less current than a regular VR cell, reducing cell temperature. It will therefore be less prone to thermal runaway whereby the cell gets in a vicious cycle of temperature rise causing increased current causing further temperature rise, etc., until the cell is destroyed. A lower temperature will also increase the life of the cell.

**Better heat transfer.** Another benefit of the semi-flooded cell over a conventional VR cell is that the heat transfer rate from the inside of the cell to the outside ambient is better. This is because the liquid electrolyte in the former makes better contact with the cell container than the sponge-like glass mat separators of the latter.

**Easier inspection.** A very important benefit of the semi-flooded cell over a conventional VR cell is that it can be inspected easily. Standby batteries are used for emergency backup for computers and telecommunication systems; battery failures are completely unacceptable and users need a method to estimate the state of health of the cells. In a conventional VR cell, neither the electrolyte level nor plate condition can be seen through the opaque walls of the cells and there is no satisfactory way yet available of checking the cells without doing expensive discharge tests. (Note: At the present time, very expensive automatic data logging equipment is being promoted for use with conventional VR cells to try and predict imminent cell failures). With the semi-flooded design, by contrast, the container may be made transparent, and all the tried and tested procedures developed for flooded cells will work with only minor modifications. The semi-flooded cell, being easier to inspect, will lead to improved system reliability.

**Low pressure recombination.** Another benefit is that the oxygen cycle is so efficient on the semi-flooded cell that it proceeds without any significant pressure inside the cell casing (that is, less than 3.45 kPa (0.5 psi)). This is in contrast to conventional VR cell designs that may have pressure relief valves set anywhere from 10.3 kPa (1.5 psi) to 68.8 kPa (10 psi). The benefit here is that the cell container does not have to be reinforced with steel as in the case of conventional VR cells, to prevent them from bulging. The semi-flooded cell may be, therefore, less expensive to manufacture than a conventional VR cell.

**More electrolyte available.** Unlike the restricted amount of electrolyte contained in the sponge-like separators of the conventional VR cell, the semi-flooded cell has potentially much more available electrolyte. For example, the plates may be placed in an oversized container deliberately to provide more water. In other words, the semi-flooded cell has, simultaneously, a larger reserve of water and a lower water consumption rate than a conventional VR cell.

**Lower acid density.** Further, in the case of lead-acid cells, because of the larger available water reservoir, the strength (density) of the acid may be lowered with yet more benefit to longevity. Therefore, the semi-flooded cell will have a longer predicted life than a conventional VR cell.

**Adjustable level.** A further advantage of a semi-flooded cell is that the electrolyte level can be changed to expose more or less area of the plates and thereby adjust the characteristics of the cell -- particularly the recombination rate. This can be done in the factory before shipment or in the field. Therefore, a semi-flooded cell can be "customized" for an application, a feature not available with the conventional VR cell.

**Predictable aging pattern.** The conventional VR cell has a very complicated pattern of water consumption -- one almost impossible to control. For example, the water consumption may be high in one zone of the sponge-like separators and not in another, causing random dry spots; it may be affected by the compression of the separator (since compression affects pore size); it may be drawn from the separator into the plates (due to the latter's smaller pore size) and affect the cell capacity.

The semi-flooded cell consumes water in a much more predictable way -- the level simply drops like in a flooded cell (but much slower). All the plate surfaces below the electrolyte are flooded uniformly with electrolyte, independently of compression or pore size or type of separator. Further, it is easy to calculate this drop in level and, therefore, easy to predict cell life. For our test cell, we calculated that the electrolyte will drop less than 7% of the height of the negative plate in 20 years on float. Since the cell is normally expected to lose 20% of its capacity in that time, limited by the positive plate, this is a very acceptable figure. Further, with more development, we believe the 7% figure can be made considerably less. In any case, if full negative capacity were required for the entire life of the cell, the initial negative capacity could easily be increased by 7% to compensate.

**Simplified emergency water addition.** If a VR cell develops a leak -- a very common failure -- it will dry out. If water can be added, the cell can recover. The problem with a conventional VR cell is that there is no visible level so the amount of water to be added cannot be easily estimated. In the case of the semi-flooded cell, the level is visible and the exact amount of water to be added can easily be seen.

### Change in Charging Voltage Preferred

If a flooded cell is converted to a semi-flooded cell, it is best to lower the charging voltage in order to obtain maximum cell life. A typical telephone flooded cell (lead-acid) is charged with an "overvoltage" of about 100 mV. Typically this is split between the positive and negative plates so they each get about 50 mV.

In the case of the semi-flooded cell, the negative is "depolarized" by the oxygen cycle so there is little or no voltage on the negative during normal operation. Therefore, if the same charging voltage intended for flooded cells is used, the positive plate will get the entire 100 mV overvoltage. This will increase the corrosion rate of the positive plate somewhat to the detriment of the life of the cell.

Accordingly, the float voltage on a semi-flooded cell should preferably be reduced by some amount depending on the application and the cell design. For longest life (minimum positive grid corrosion) the positive voltage should be kept in the range 30 to 70 mV.

It is understood that the foregoing description is intended to describe certain embodiments of the present invention, and is not intended to limit it in any way. The invention is to be read as limited by its claims only.

## Claims

1. An electric lead acid battery (10,38,48,44), comprising:
A sealed housing (12);
a liquid electrolyte (14) within said sealed housing (12), said electrolyte (14) comprising sulfuric acid and having a liquid level (16) defining the bottom of a gas space (18) within said housing (12) in which oxygen collects;
a positive electrode (20) immersed in said electrolyte (14),
a negative electrode (22) having active material, said negative electrode (22) being immersed in said electrolyte (14), and partially exposed above said liquid level (16); and
a pressure relief valve (34) disposed in said battery (10,38,44,48) to allow gas to escape said sealed housing (12) while preventing oxygen from outside the housing (12) to contact said negative electrode (22).

2. An electric battery in accordance with claim 1 wherein said positive electrode (20) is completely submerged in said electrolyte (14).

3. An electric battery in accordance with claim 1 wherein said negative electrode (22) comprises a plate having a plate section (36) extending above the liquid level.

4. An electric battery in accordance with claim 3 wherein said plate section (36) is an integral part of said plate.

5. An electric battery in accordance with claim 1 wherein the amount of the negative electrode (22) exposed above the liquid level (16) is between about 0.25 percent to about 25 percent of the area of the negative electrode.

6. An electric battery in accordance with claim 1 further comprising a negative strap (54) connecting said negative plate to a negative terminal (26) disposed outside said housing (12), wherein said strap is submerged in said electrolyte (14).

7. An electric battery in accordance with claim 1 further comprising a catalyst (50) that combines oxygen and hydrogen and which is in communication with said gas space (18).

8. An electric battery in accordance with claim 7 wherein said catalyst (50) is selected from the group comprising palladium, platinum, rhodium, or tungsten carbide.

9. An electric battery in accordance with claim 7 wherein said catalyst (50) is combined with said pressure relief valve (34) in the form of a vent plug.

10. An electric battery in accordance with claim 1 further comprising a separator (32) between said negative (22) and positive (20) electrodes.

11. An electric battery in accordance with claim 10 wherein said separator (32) comprises a sponge-like separator (46) made of a weak wick material having a section partially immersed in said electrolyte (14) and another section in contact with said negative and positive electrodes above said liquid level (16).

12. An electric battery in accordance with claim 11 wherein said sponge-like separator (46) comprises glass fibers having a thickness of at least 10 microns (10µm).

13. A lead acid storage battery (10,38,44,48), comprising:
A sealed housing (12);
a fluid electrolyte (14) comprising sulfuric acid within said housing (12);
a gas space (18) disposed within said housing (12) wherein oxygen produced within the battery cell collects;
a positive electrode (20) mounted in said housing (12) and immersed in said electrolyte (14);
a negative electrode (22), having active material, mounted in said housing (12) and immersed in said electrolyte (14), said negative electrode (22) having a section (36) exposed to the oxygen in said gas space (18); and
a one way valve (34) disposed in said housing (12) to allow excess gas to escape from said housing (12).

14. A battery in accordance with claim 13 wherein said positive and negative electrodes are formed as positive and negative plates.

15. A battery in accordance with claim 14 wherein the amount of the negative plate exposed to oxygen in the gas space (18) is between about 0.25 percent to about 25 percent of the area of the negative plate.

16. A battery in accordance with claim 14 further comprising a separator (32) between said negative and positive plates.

17. A battery in accordance with claim 16 wherein said separator comprises a sponge-like separator (46) having a section partially immersed in said electrolyte (14) and another section in contact with said negative and positive plates above said liquid level (16).

18. A battery in accordance with claim 14 further comprising a catalyst (50) that combines oxygen and hydrogen and which is positioned to be in communication with said gas space (18).

19. A battery in accordance with claim 15 further comprising a separator (32) between said negative and positive plates, and further comprising a catalyst (50) in communication with said gas space (18).

20. A method of storing electricity, comprising the steps of:
Electrically charging a lead acid battery having
a sealed housing (12);
a liquid electrolyte (14) comprising sulfuric acid within said sealed housing (12);
a positive electrode (20) immersed in said electrolyte (14);
a negative electrode (22) having active material and immersed in said electrolyte (14);
a pressure relief valve (34) disposed in said battery (10,38,44,48) to allow gas to escape said sealed housing (12) while preventing oxygen from outside the housing (12) from entering therein;
collecting oxygen created within said housing (12); and
exposing a section (36) of the negative electrode (22) to the collected oxygen.

21. A method as defined in claim 20 wherein said oxygen collects in a gas space (18) above a liquid level (16) of said electrolyte (14), and wherein said negative electrode (22) is exposed to the collected oxygen by being partially exposed above said liquid level (16) into said gas space (18).

22. A method as defined in claim 20 wherein said negative electrode (22) comprises a plate.

23. A method as defined in claim 20 further comprising the step of exposing hydrogen and the oxygen within said housing (12) to a catalyst (50) to form water.

24. An electric battery in accordance with claim 1 further comprising a catalyst that combines oxygen and hydrogen and which is positioned to be in communication with said gas space.

25. An electric battery in accordance with claim 24 wherein the amount of the negative electrode exposed in said gas space between about 0.25 percent to about 25 percent of the area of the negative electrode.

26. A method of reducing water consumption in a lead acid storage battery (10,38,44,48) having a liquid electrolyte (14) which includes sulfuric acid, a negative electrode (22) and a positive electrode (20); said method comprising:
(a) Collecting oxygen produced within the battery in a gas space (18) above said liquid electrolyte (14);
(b) exposing a portion (36) of the negative electrode (22) to the oxygen within said gas space (18);
(c) venting excess gas from said battery; and
(d) preventing gas outside the battery from entering said gas space (18).

27. A method in accordance with claim 26 further comprising the step of:
(e) Recombining oxygen and hydrogen within said battery to form water by use of a catalyst.

## Patentansprüche

1. Elektrische Blei-Säure-Batterie (10,38,48,44), mit:
Einem abgedichteten Gehäuse (12);
einem flüssigen Elektrolyten (14) innerhalb des abgedichteten Gehäuses (12), wobei der Elektrolyt (14) Schwefelsäure aufweist und mit einem Flüssigkeitsspiegel (16) den Boden eines Gasraums (18) in dem Gehäuse (12) definiert, in dem sich Sauerstoff ansammelt;
einer in den Elektrolyten (14) eingetauchten positiven Elektrode (20),
einer aktives Material aufweisenden negativen Elektrode (22), wobei die negative Elektrode (22) in den Elektrolyten (14) eingetaucht ist und teilweise aus dem Flüssigkeitsspiegel (16) herausragt; und
einem in der Batterie (10,38,44,48) angeordneten Druckbegrenzungsventil (34), um ein Entweichen von Gas aus dem abgedichteten Gehäuse (12) zu gestatten, aber zu verhindern, dass Sauerstoff von der Außenseite des Gehäuses (12) in Berührung mit der negativen Elektrode (22) gelangt.

2. Elektrische Batterie nach Anspruch 1, bei der die positive Elektrode (20) vollständig in dem Elektrolyten (14) versenkt ist.

3. Elektrische Batterie nach Anspruch 1, bei der die negative Elektrode (22) einen Plattenteil (36) aufweist, der sich bis oberhalb des Flüssigkeitsspiegels erstreckt.

4. Elektrische Batterie nach Anspruch 3, bei der der Plattenteil (36) ein integrierender Bestandteil der Platte ist.

5. Elektrische Batterie nach Anspruch 1, bei der der oberhalb des Flüssigkeitsspiegels (16) angeordnete Teil der negativen Elektrode (22) zwischen ungefähr 0,25 % bis ungefähr 25 % der Fläche der negativen Elektrode beträgt.

6. Elektrische Batterie nach Anspruch 1, die außerdem ein negatives Band (54) aufweist, das die negative Platte mit einem außerhalb des Gehäuses (12) angeordneten negativen Anschluß (26) verbindet, wobei das Band in dem Elektrolyten (14) versenkt ist.

7. Elektrische Batterie nach Anspruch 1, die außerdem einen Katalysator (50) aufweist, der Sauerstoff und Wasserstoff miteinander kombiniert und in Verbindung mit dem Gasraum (18) steht.

8. Elektrische Batterie nach Anspruch 7, bei der der Katalysator (50) aus der Paladium, Platin, Rhodium oder Wolframkarbid umfassenden Gruppe ausgewählt ist.

9. Elektrische Batterie nach Anspruch 7, bei der der Katalysator (50) mit dem Druckbegrenzungsventil (34) in Gestalt eines Verschlußstopfens kombiniert ist.

10. Elektrische Batterie nach Anspruch 1, die außerdem einen Separator (32) zwischen der negativen (22) und der positiven Elektrode (20) aufweist.

11. Elektrische Batterie nach Anspruch 10, bei der der Separator (32) einen schwammähnlichen Separator (46) aufweist, der aus einem schwachen Dochtmaterial hergestellt ist, von dem ein Teil in den Elektrolyten (14) eingetaucht ist und ein anderer Teil oberhalb des Flüssigkeitsspiegels (16) in Berührung mit der negativen und der positiven Elektrode steht.

12. Elektrische Batterie nach Anspruch 11, bei der der schwammartige Separator (46) Glasfasern mit einer Dicke von wenigstens 10 µm aufweist.

13. Blei-Säure-Speicherbatterie (10,38,44,48), mit:
Einem abgedichteten Gehäuse (12);
einem flüssigen Elektrolyten (14), der Schwefelsäure aufweist, innerhalb des Gehäuses (12);
einem Gasraum (18), der innerhalb des Gehäuses (12) angeordnet ist und in welchem sich innerhalb der Batteriezelle erzeugter Sauerstoff ansammelt;
einer in dem Gehäuse (12) montierten und in den Elektrolyten (14) eingetauchten positiven Elektrode (20);
einer aktives Material aufweisenden negativen Elektrode (22), die in dem Gehäuse (12) montiert und in den Elektrolyten (14) eingetaucht ist, wobei die negative Elektrode (22) einen dem Sauerstoff in dem Gasraum (18) ausgesetzten Teil (36) aufweist; und
einem Einwegeventil (34) das in dem Gehäuse (12) angeordnet ist, um Überschußgas ein Entweichen aus dem Gehäuse (12) zu ermöglichen.

14. Batterie nach Anspruch 13, bei der die positiven und negativen Elektroden als positive und negative Platten ausgebildet sind.

15. Batterie nach Anspruch 14, bei der der in dem Gasraum (18) dem Sauerstoff ausgesetzte Anteil der negativen Platte zwischen ungefähr 0,25 % bis ungefähr 25 % der Fläche der negativen Platte beträgt.

16. Batterie nach Anspruch 14, die außerdem einen Separator (32) zwischen der negativen und der positiven Platte aufweist.

17. Batterie nach Anspruch 16, bei der der Separator einen schwammähnlichen Separator (46) aufweist, wobei ein Teil des Separators (46) teilweise in den Elektrolyten (14) eingetaucht ist und ein anderer Teil sich oberhalb des Flüssigkeitsspiegels (16) in Berührung mit der negativen und positiven Platte befindet.

18. Batterie nach Anspruch 14, die außerdem einen Katalysator (50) aufweist, der Sauerstoff und Wasserstoff kombiniert und in Verbindung mit dem Gasraum (18) angeordnet ist.

19. Batterie nach Anspruch 15, die außerdem einen Separator (32) zwischen der negativen und der positiven Platte aufweist, und die ferner einen Katalysator (50) in Verbindung mit dem Gasraum (18) aufweist.

20. Verfahren zur Speicherung von Elektrizität, mit folgenden Schritten:
Es wird eine Blei-Säure-Batterie elektrisch geladen, die aufweist
ein abgedichtetes Gehäuse (12);
einen flüssigen Elektrolyten (14) mit Schwefelsäure innerhalb des abgedichteten Gehäuses (12);
eine in den Elektrolyten (14) eingetauchte positive Elektrode (20);
eine aktives Material aufweisende negative Elektrode (22), die in den Elektrolyten (14) eingetaucht ist;
ein in der Batterie (10,38,44,48) angeordnetes Druckbegrenzungsventil (34), um ein Entweichen von Gas aus dem abgedichteten Gehäuse (12) zu gestatten, aber zu verhindern, dass Sauerstoff von der Außenseite des Gehäuses (12) in das Gehäuse eintritt;
in dem Gehäuse (12) entstandener Sauerstoff wird gesammelt; und
ein Teil (36) der negativen Elektrode (22) wird dem angesammelten Sauerstoff ausgesetzt.

21. Verfahren nach Anspruch 20, bei dem sich der Sauerstoff in einem Gasraum (18) oberhalb eines Flüssigkeitsspiegels (16) des Elektrolyten (14) ansammelt, und bei dem die negative Elektrode (22) dem angesammelten Sauerstoff dadurch ausgesetzt wird, daß sie teilweise oberhalb des Flüssigkeitsspiegels (16) in den Gasraum (18) hineinragt.

22. Verfahren nach Anspruch 20, bei dem die negative Elektrode (22) eine Platte aufweist.

23. Verfahren nach Anspruch 20, mit dem weiteren Schritt, dass in dem Gehäuse (12) Wasserstoff und der Sauerstoff einem Katalysator (50) zur Bildung von Wasser ausgesetzt werden.

24. Elektrische Batterie nach Anspruch 1, die außerdem einen Katalysator aufweist, der Sauerstoff und Wasserstoff miteinander kombiniert, und in Verbindung mit dem Gasraum angeordnet ist.

25. Elektrische Batterie nach Anspruch 24, bei der der in dem Gasraum ausgesetzte Anteil der negativen Elektrode zwischen ungefähr 0,25 % bis ungefähr 25 % der Fläche der negativen Elektrode beträgt.

26. Verfahren zur Herabsetzung des Wasserverbrauchs in einer Blei-Säure-Speicherbatterie (10,38,44,48) mit einem flüssigen Elektrolyten (14), der Schwefelsäure enthält, einer negativen Elektrode (22) und einer positiven Elektrode (20); wobei das Verfahren umfaßt:
(a) Innerhalb der Batterie erzeugter Sauerstoff wird in einem Gasraum (18) oberhalb des flüssigen Elektrolyten (14) angesammelt;
(b) ein Teil (36) der negativen Elektrode (22) wird dem Sauerstoff innerhalb des Gasraums (18) ausgesetzt;
(c) Überschussgas wird aus der Batterie abgelassen; und
(d) es wird verhindert, dass Gas von der Außenseite der Batterie in den Gasraum (18) eintritt.

27. Verfahren nach Anspruch 26, das außerdem folgenden Schritt aufweist:
(e) Innerhalb der Batterie werden Sauerstoff und Wasserstoff rekombiniert, um unter Verwendung eines Katalysators Wasser zu bilden.

## Revendications

1. Accumulateur électrique acide au plomb (10, 38, 48, 44) comprenant:
un logement étanche (12);
un électrolyte liquide (14) à l'intérieur dudit logement étanche (12), ledit électrolyte (14) comprenant de l'acide sulfurique et comportant un niveau de liquide (16) qui définit le fond d'un espace gazeux (18) à l'intérieur dudit logement (12} dans lequel l'oxygène est collecté;
une électrode positive (20) immergée dans ledit électrolyte (14),
une électrode négative (22) comportant un matériau actif, ladite électrode négative (22) étant immergée dans ledit électrolyte (14), et partiellement exposée au-dessus dudit niveau de liquide (16); et
une soupape de décharge de pression (34) disposée dans ledit accumulateur (10, 38, 48, 44) pour permettre au gaz de s'échapper dudit logement étanche (12) tout en empêchant l'oxygène provenant de l'extérieur du logement (12) de venir en contact avec ladite électrode négative (22).

2. Accumulateur électrique selon la revendication 1, dans lequel ladite électrode positive (20) est totalement immergée dans ledit électrolyte (14).

3. Accumulateur électrique la revendication 1, dans lequel ladite électrode négative (22) comprend une plaque comportant une section de plaque (36) s'étendant au dessus du niveau du liquide.

4. Accumulateur électrique selon la revendication 3, dans lequel ladite section de plaque (36) est une partie solidaire de ladite plaque.

5. Accumulateur électrique selon la revendication 1, dans lequel la quantité d'électrode négative (22) exposée au-dessus du niveau du liquide (16) est comprise entre environ 0.25% et environ 25% de la surface de l'électrode négative.

6. Accumulateur électrique selon la revendication 1, comprenant en outre une connexion négative (30) reliant ladite plaque négative à une borne négative (26) disposée à l'extérieur dudit logement (12), dans lequel ladite connexion est immergée dans ledit électrolyte (14).

7. Accumulateur électrique selon la revendication 1, comprenant en outre un catalyseur (50) qui combine l'oxygène et l'hydrogène et qui est en communication avec ledit espace pour volume gazeux (18).

8. Accumulateur électrique selon la revendication 7, dans lequel ledit catalyseur (50) est choisi dans le groupe comprenant le palladium, le platine, le rhodium ou le carbure de tungstène.

9. Accumulateur électrique selon la revendication 7, dans lequel ledit catalyseur (50) est combiné avec ladite soupape de décharge de pression (34) sous la forme d'un bouchon de fermeture.

10. Accumulateur électrique selon la revendication 1, comprenant en outre un séparateur (32) situé entre lesdites électrodes négative (22) et positive (20).

11. Accumulateur électrique selon la revendication 10, dans lequel ledit séparateur (32) comprend un séparateur du type spongieux (46) constitué de matériaux de mèches peu résistantes ayant une section partiellement immergée dans ledit électrolyte (14) et une autre section en contact avec lesdites électrodes négative et positive au-dessus dudit niveau de liquide (16).

12. Accumulateur électrique selon la revendication 11, dans lequel ledit séparateur du type spongieux (46) comprend des fibres de verre présentant une épaisseur d'au moins 10 pm (10 microns).

13. Accumulateur électrique acide au plomb (10, 38, 44, 48), comprenant:
un logement étanche (12);
un électrolyte fluide (14) comprenant de l'acide sulfurique à l'intérieur dudit logement (12);
un espace gazeux (18) disposé à l'intérieur dudit logement (12) dans lequel l'oxygène produit à l'intérieur de l'élément d'accumulateur est collecté;
une électrode positive (20) montée dans ledit logement (12) et immergée dans ledit électrolyte (14);
une électrode négative (22) comportant un matériau actif, montée dans ledit logement (12) et immergée dans ledit électrolyte (14); ladite électrode négative (22) comportant une section (36) exposée à l'oxygène dans ledit espace gazeux (18); et
une soupape unidirectionnelle (34) disposée dans ledit logement (12) pour permettre au gaz en surplus de s'échapper dudit logement (12).

14. Accumulateur selon la revendication 13, dans lequel lesdites électrodes positive et négative sont formées sous forme de plaques positive et négative.

15. Accumulateur selon la revendication 14, dans lequel la quantité de plaque négative exposée à l'oxygène dans l'espace gazeux (18) est compris entre environ 0.25% et environ 25% de la surface de la plaque négative.

16. Accumulateur selon la revendication 14, comprenant en outre un séparateur (32) situé entre lesdites plaques négative et positive.

17. Accumulateur selon la revendication 16, dans lequel ledit séparateur comprend un séparateur du type spongieux (46) comportant une section partiellement immergée dans ledit électrolyte (14) et une autre section en contact avec lesdites plaques négative et positive au-dessus dudit niveau de liquide (16).

18. Accumulateur selon la revendication 14, comprenant en outre un catalyseur (50) qui combine l'oxygène et l'hydrogène et qui est positionné pour être en communication avec ledit espace gazeux (18).

19. Accumulateur selon la revendication 15, comprenant en outre un séparateur (32) situé entre lesdites plaques négative et positive et comprenant en outre un catalyseur (50) en communication avec ledit espace gazeux (18).

20. Procédé d'accumulation d'électricité, comprenant les étapes consistant à:
charger électriquement un accumulateur électrique acide au plomb comportant
un logement étanche (12);
un électrolyte (14) liquide comprenant de l'acide sulfurique à l'intérieur dudit logement étanche (12);
une électrode positive (20) immergée dans ledit électrolyte (14);
une électrode négative (22) comportant un matériau actif et immergée dans ledit électrolyte (14);
une soupape de décharge de pression (34) disposée dans ledit accumulateur (10, 38, 44, 48) pour permettre au gaz de s'échapper dudit logement étanche (12) tout en empêchant l'oxygène à l'extérieur du logement (12) d'entrer dans celui-ci;
collecter l'oxygène créé à l'intérieur dudit logement (12); et
exposer une section (36) de l'électrode négative (22) à l'oxygène collecté.

21. Procédé selon la revendication 20, dans lequel ledit oxygène se collecte dans un espace gazeux (18) au-dessus du niveau de liquide (16) dudit électrolyte (14), et dans lequel ladite électrode négative (22) est exposée à l'oxygène collecté en étant partiellement exposée au-dessus dudit niveau de liquide (16) dans ledit espace gazeux (18).

22. Procédé selon la revendication 20, dans lequel ladite électrode négative (22) comprend une plaque.

23. Procédé selon la revendication 20, comprenant en outre l'étape consistant à exposer l'oxygène et d'hydrogène à l'intérieur dudit logement (12) à un catalyseur (50) pour former de l'eau.

24. Accumulateur électrique selon la revendication 1, comprenant en outre un catalyseur qui combine d'oxygène et d'hydrogène et qui est positionné pour être en communication avec ledit espace gazeux.

25. Accumulateur électrique selon la revendication 24, dans lequel la quantité d'électrode négative exposée dans ledit espace gazeux est comprise entre environ 0.25% et environ 25% de la surface de l'électrode négative.

26. Procédé de réduction de consommation d'eau dans un accumulateur acide au plomb (10, 38, 44, 48) comportant un électrolyte liquide (14) contenant de l'acide sulfurique, une électrode négative (22) et une électrode positive (20); ledit procédé comprenant les étapes consistant à:
(a) collecter d'oxygène produit à l'intérieur de l'accumulateur dans un espace gazeux (18) au-dessus dudit électrolyte liquide (14);
(b) exposer une partie (36) de l'électrode négative (22) à l'oxygène à l'intérieur dudit espace gazeux (18);
(c) évacuer le gaz en surplus dudit accumulateur; et
(d) empêcher de gaz à l'extérieur de l'accumulateur d'entrer dans ledit espace gazeux (18).

27. Procédé selon la revendication 26, comprenant en outre l'étape consistant à:
(e) recombiner d'oxygène et d'hydrogène à l'intérieur de l'accumulateur pour former de l'eau par l'utilisation d'un catalyseur.
